# EUROPEAN PATENT SPECIFICATION

(11) **EP 1 726 210 B1**
(45) Date of publication and mention of the grant of the patent: **10.08.2011**
(21) Application number: 05425362.0
(22) Date of filing: 23.05.2005
(51) Int. Cl.: A21C 15/00

(54) **Apparatus for the production of frozen nests of cooked long pasta**
Vorrichtung zur Herstellung von aus gekochten Teigsträngen geformten gefrorenen Nestern.
Dispositif pour la production des nids surgelés de pâte alimentaire allongée précuite

(43) Date of publication of application: 29.11.2006
(73) Proprietor: Barilla G. e R. Fratelli S.p.A., 43100 Parma (IT)
(72) Inventor: Caselli, Oreste, c/o Barilla G. e R. Fratelli SpA, 43100 Parma (IT)
(74) Representative: Zambardino, Umberto

(56) References cited:
- EP-A- 0 465 893
- EP-A- 1 428 439
- WO-A-01/52669
- IT-B- 1 247 939
- PATENT ABSTRACTS OF JAPAN vol. 005, no. 140 (C-070), 4 September 1981 (1981-09-04) & JP 56 072656 A (ASAHI CHEM IND CO LTD), 16 June 1981 (1981-06-16)
- PATENT ABSTRACTS OF JAPAN vol. 1998, no. 03, 27 February 1998 (1998-02-27) & JP 09 299052 A (KOBAYASHI TOSHIO), 25 November 1997 (1997-11-25)

## Description

### Field of the invention

In its most general aspect the present invention refers to the field of the food industry.

In particular, the present invention concerns an apparatus for the production of frozen nests of cooked long pasta.

### Prior art

It is well known that cooked and frozen pasta has long gained a recognised techno-commercial importance, both for its organoleptic and nutritional qualities and for its practicality and speed of handling at the time of consumption.

Indeed, it is known that cooked and frozen pasta can be easily "heated up" to the cooked conditions that are optimal for consumption in very few minutes by heating in a pan or similar cooking vessels often with the addition of the desired condiments.

In the field of the food industry different apparatuses for the production of cooked and frozen pasta have therefore been developed.

In particular, in the field of long pasta such as spaghetti, linguine, and the like different processes and relative apparatuses are known that enable the freezing of said cooked long pasta in the form of nests.

Owing to its intrinsic fragility, long pasta must be frozen in the form of nests whereas, on the contrary, short pasta shapes may be frozen individually for example on a fluid bed of the pasta itself by IQF (Individual Quickly Frozen) technology.

Conventional apparatuses for the production of frozen nests of cooked long pasta generally comprise a plurality of cups arranged in series on suitable cross-members, said cross-members being rotatably supported on suitable chains and mobile with them. Such apparatuses also comprise a plurality of hoppers to continuously load predefined portions of cooked long pasta into the cups to form a nest of cooked pasta in each cup, a freezer to carry out the freezing of the nests of cooked long pasta in the respective cups and suitable devices that allow the frozen nests of cooked long pasta to be removed from the respective cups by overturning the cross-members followed by heating of the cups so as to allow the frozen nests to detach by gravity.

Although advantageous in various respects, the aforementioned apparatuses have the drawbacks that the shape of the frozen nests of cooked long pasta obtained from them is somewhat random and substantially variable from nest to nest.

This generally makes the aforementioned nest visually unappealing to the end consumer.

Patent Abstracts of Japan vol. 005 n. 140 4 September 1981 & JP 56072656 disclose an apparatus for preparing frozen noodles wherein a noodle belt 2 sent by transporter rolls 1 and 2 is formed into noodle lines 5 by a noodle line forming roller 3. The noodle lines are cut intermittently by a cutter 4 and recovered in separate box chambers 60, thus obtaining apparently a bundle of noodles in each chamber. The box chambers 60 having the noodle bundles therein are transported by an endless conveyor belt 6 to the boiling zone, water washing zone, water removing zone and freezing zone. When the box chamber is faced downward at the direction changing position of the conveyor belt 6, the bundles of frozen noodles are dropped.

The technical problem forming the basis of the present invention is that of providing an apparatus for the production of frozen nests of cooked long pasta having structural and functional characteristics so as to overcome the aforementioned drawback.

### Summary of the invention

The idea of solution to such a technical problem was that of modifying the cups of the cross-members so as to be able to give the frozen nests of cooked long pasta a well-defined shape that is more appealing to the consumer.

Based upon such an idea of solution, the aforementioned technical problem is solved by an apparatus for the production of frozen nests of cooked long pasta comprising:
- a plurality of cross-members each having a plurality of cups, said cross-members being rotatably supported on chains and mobile with them,
- a plurality of loading hoppers to introduce predetermined portions of cooked long pasta into said cups thus obtaining a nest of cooked long pasta in each cup,
- a freezer to carry out the freezing of said nests of cooked long pasta, thus obtaining a plurality of frozen nests of cooked long pasta in the respective cups of said cross-members,
- means for overturning said cross-members containing said frozen nests in respective cups,
- a plurality of push rods, one for each cup, having a portion about which a nest forms and adheres, said push rods being vertically mobile in said cups between a rest position in which said portions with the respective nests formed about them are situated in the respective cups and an operative position in which said portions with the respective nests formed about them project from the respective cups,
- at least one pusher acting on push rods of overturned cross-members containing said frozen nests in the respective cups so as to take said push rods from said rest position to said operative position, with the result that said portions of the push rods and said frozen nests formed about come to project from the respective cups,
- means for intercepting said portions of the push rods and said frozen nests projecting from the respective cups causing the detachment of said frozen nests from said portions of the push rods.

The main advantage of the apparatus according to the invention lies in the fact that the frozen nests of cooked long pasta obtained from it have a well-defined shape and a pleasantly rustic, home-made and original appearance that is appreciated by the end consumer.

Indeed, it should be noted that thanks to the characteristics of the cups of said apparatus each comprising a push rod about a portion of which the nest forms, the frozen nests are obtained with a substantially "doughnut" shape that is appreciated by the end consumers.

Moreover, such a "doughnut" shape of the frozen nests of long pasta offers a greater contact surface for water or a condiment compared to conventional shapes of frozen nests of long pasta, thus enabling the pasta to be heated up to optimal cooked conditions more quickly.

Further characteristics and advantages of the present invention shall become clearer from the following description of a preferred embodiment of an apparatus according to the invention, said description being given for illustrative and not limiting purposes with reference to the attached drawings.

### Brief description of the figures

In the figures:

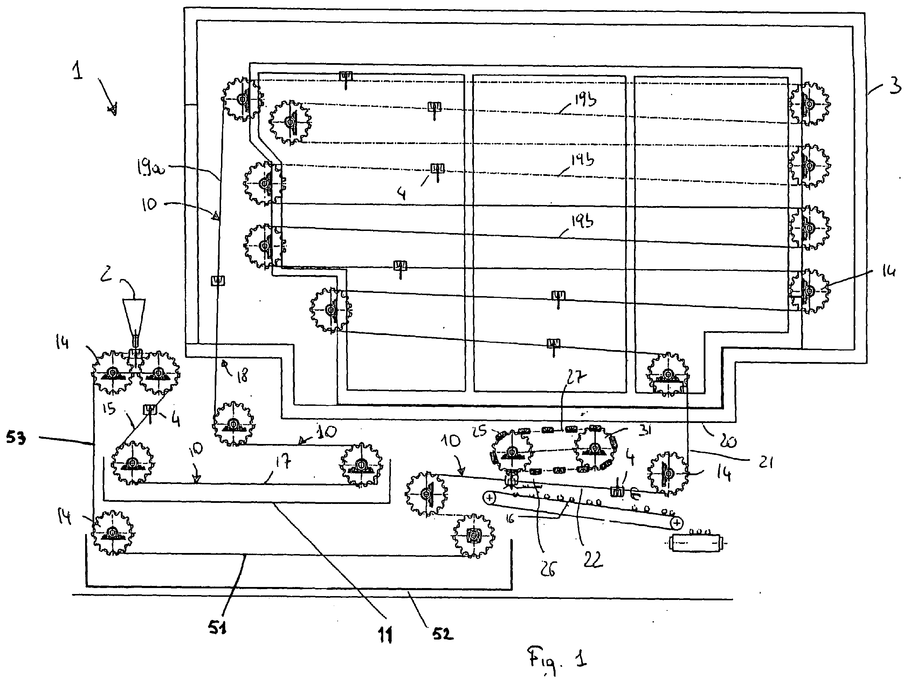

Figure 1 represents a side view of an apparatus for the production of frozen nests of long pasta,

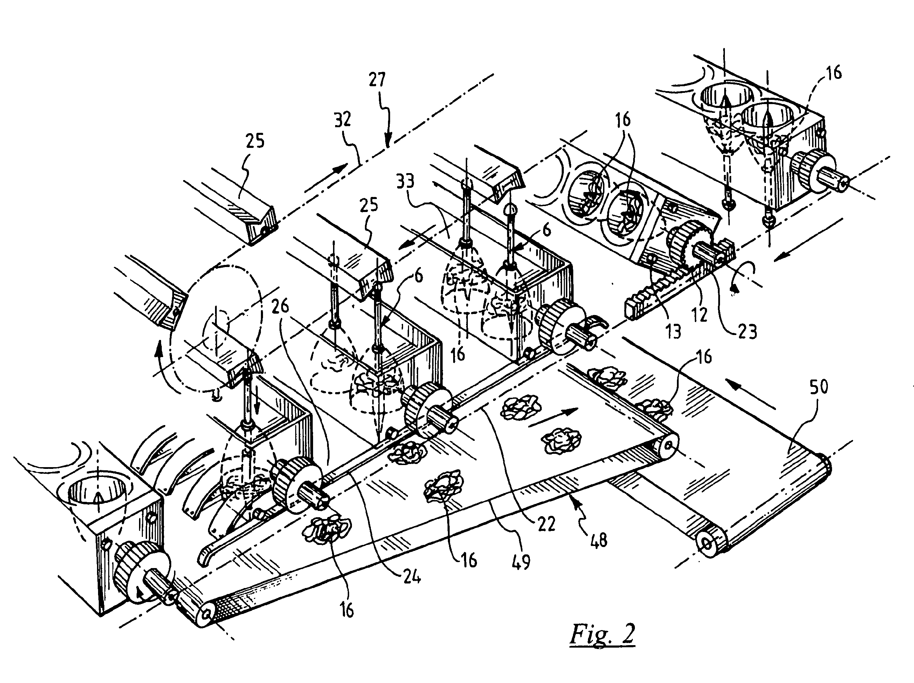

Figures 2 and 3 each represent a view of a detail of the apparatus of figure 1,
Figures 4 to 7 each represent a view of a detail of the apparatus of figure 1 during some operative steps thereof.

### Detailed description of the invention

With reference to the aforementioned figures, an apparatus for the production of frozen nests of long pasta is globally indicated by 1.

The apparatus 1 comprises a plurality of loading hoppers 2, a freezer 3 and a plurality of cross-members 4 each having a plurality of cups 5 to receive predetermined portions of cooked long pasta from said loading hoppers 2.

Each cup 5 comprises a push rod 6 having a substantially central stem 7 terminating at its opposite ends with a conical portion 8 and with a stop 9.

Each push rod 6 is vertically mobile through sliding of the stem 7 in a bore 5a made on the bottom of a respective cup 5 between a rest position in which the conical portion 8 is situated inside said cup 5 and an operative position in which the conical portion 8 projects from said cup 5.

The cross-members 4 are arranged in succession and are rotatably, or rather, tiltably supported on opposite chains 10 that also serve to convey them to the various working stations of the apparatus 1 according to the invention. The chains 10 are mobile along a predetermined path between toothed wheels 14.

The cross-members 4 also have, at the opposite ends, a toothed gear 12 and a pair of opposite pegs 13 the function of which will become clearer hereafter in the present description.

The cross-members 4 each have a sufficiently low barycentre so as not to be subject to spontaneous overturning along their path in which the cross-members 4 are conveyed by the chains 10.

The loading hoppers 2 introduce portions of cooked long pasta into cups 5 of a cross-member 4 underneath said hoppers 2. In particular, the hoppers 2 are present in a number equal to the cups 5 of said cross-member 4 so that each cup 5 receives a portion of pre-cooked long pasta from a respective hopper 2.

The loading of the portions of cooked long pasta into the hoppers 2 is carried out in a conventional manner for example from baskets (not shown) coming from a cooking tank containing said portions of cooked long pasta. Such baskets are suitably conveyed towards the hoppers 2 and turned over so as to unload the portions of cooked pasta into the respective hoppers 2.

The apparatus 1 is also provided with means, for example a shower (not shown) for continuously injecting cold water (preferably at a temperature of about 2°C) into the hoppers 2 so as to allow the cooked long pasta to cool down.

In accordance with the present invention, the portions of cooked long pasta loaded into the cups 5 each form a nest 16 around the conical portion 8 of a respective push rod 6. Moreover, each nest 16 will substantially adhere to the conical portion 8 of the respective push rod 6.

After loading, the cross-members 4 containing the nests 16 of cooked long pasta continue their path along a descending track 15 of the chains 10 reaching a tank 11 containing salted water. Inside the tank 11, the cross-members 4 continue their path along a substantially horizontal track 17 thus effecting the salting of the cooked long pasta of the nests 16 contained in the cups 5 of said cross-members 4. The salted water inside the tank 11 is preferably kept at a temperature of about 2°C and the salt concentration is preferably about 6% by weight.

In the apparatus 1, the cross-members 4 exiting the salting tank 11 continue their path being conveyed by the chains 3 reaching the aforementioned freezer 3.

The freezer 3 has an inlet opening 18 for the cross-members 4 coming from the salting tank 15 and an outlet opening 20 for said cross-members 4.

Inside the freezer 3, the cross-members 4 that have passed the inlet opening 18 are initially conveyed by the chains 10 towards the top of the freezer 3 along a track 19a and from here are made to follow a descending zig-zag path along tracks 19b of said chains 10 situated at progressively decreasing heights until the outlet opening 20 is reached.

The path of the cross-members 4 inside the freezer 3 is suitably predetermined as a function of the desired holding time to enable a suitable freezing of the nests 16 contained in the cups 5 of such cross-members.

Generally, the freezer 3 operates at a temperature of between -10°C and -35°C, preferably -30°C, and the holding time of the cross-members 4 inside the freezer 3 is between 5 and 15 minutes.

At the outlet of the freezer 3, the cross-members 4 containing the frozen nests 16 of cooked long pasta in the respective cups 5 after having covered a short vertical section 21 still conveyed by the chains 10 continue their path on a track 22 of the chains 10 where they are subjected to overturning, i.e. rotated by 180°.

In this regard, the apparatus 1 includes, at the track 22 of the chains 10, a pair of rack rails 23 of predetermined length to which the teeth of the gear 12 of the cross-members 4 conveyed by the chains 10 engage. This brings about the rotation of the cross-members 4, which, having crossed the rack rails 23 will be overturned, i.e. rotated by 180°.

It should be noted that once the rack rails 23 have been crossed, the cross-members 4, because of their barycentre, would tend to return to their original configuration prior to being overturned.

However, this is prevented by the fact that the rack rails 23 are immediately followed along the path of the chains 10 on the track 22 by guiding rails 24 of predetermined length with which the opposite pegs 13 of the overturned cross-members 4 engage.

In such a way, the cross-members 4 are stably kept in their overturned configuration along a predetermined section of the track 22 of the chains 20 of a length substantially equal to that of the guiding rails 24.

It should be noted that in the overturned cross-members 4 the push rods 6 substantially maintain their original position before being overturned with the conical portions 8 and the frozen nests 16 formed about them situated inside the respective cups 5. This is essentially due to the adhesion characteristics of said frozen nests 16 to the inner walls of said cups 5.

The apparatus 1 also comprises at least one pusher situated above the track 22 of the chains 10 and transversal with respect to the forward direction of the overturned cross-members 4 on said track 22. Said at least one pusher abuts against the push rods 6 of said overturned cross-members 4 causing them to lower into the respective cups 5 reaching an operative position in which said conical portions 8 of said push rods 6 and the frozen nests 16 formed about them project below from the respective cups 5.

More specifically, said at least one pusher comprises a plurality of plates 25 chained together by respective chains 27 and being mobile in the same forward direction of the overturned cross-members 4 along an oblique path converging towards the chains 10 of the track 22 so as to create a zone 26 of minimum distance between the plates 25 and the chains 10 of the track 22 in which said plates 25 intercept said overturned cross-members 4 abutting against the respective push rods 6 causing the conical portions 8 and of the frozen nests formed about them to descend into the respective cups 5 to the extent that they project from said cups 5.

In the present embodiment, the plates 25 with the respective connection chains 27 are mobile between two toothed wheels 31 arranged at different heights so as to have an ascending section 32 and a descending section 33, the latter constituting said oblique path converging towards the chains 10 of the track 22.

The apparatus 1 according to the invention also comprises means for intercepting the conical portions 8 of the push rods 6 with the respective frozen nests 6 projecting from the cups 5 of the overturned cross-members 4 and for causing the detachment of said frozen nests 16 from said wedges 8.

Such means are preferably in the form of a rack 41 having a rib 42 from which a plurality of transversal bars 43 substantially parallel to each other, and a plurality of curved plate-like elements 44 extend, each curved plate-like element 44 being mounted on a respective bar 43 and comprising a portion 44a of greater width than the respective bar 43 that tapers in a portion 44b facing towards the rib 42.

The rack 41 is arranged below the track 22 of the chains 10 conveying the overturned cross-members 4 and transversal with respect to the forward direction of said overturned cross-members 4 so as to intercept the conical portions 8 of the push rods 6 projecting from the cups 5 of said overturned cross-members 4 that carry the frozen nests 16 wound about them at tapered portions 44b of adjacent curved plate-like elements 44.

In accordance with the present invention, the distance A between adjacent curved plate-shaped elements 44 in their tapered portion 44b is such as to allow the passage of the frozen nests 16 wound about the respective conical portions 8 of the push rods 6 between them, whereas the distance B between adjacent curved plate-shaped elements 44 in their portion 44a of greater width is chosen so as to allow only the conical portions 8 of the push rods 6 to pass between them.

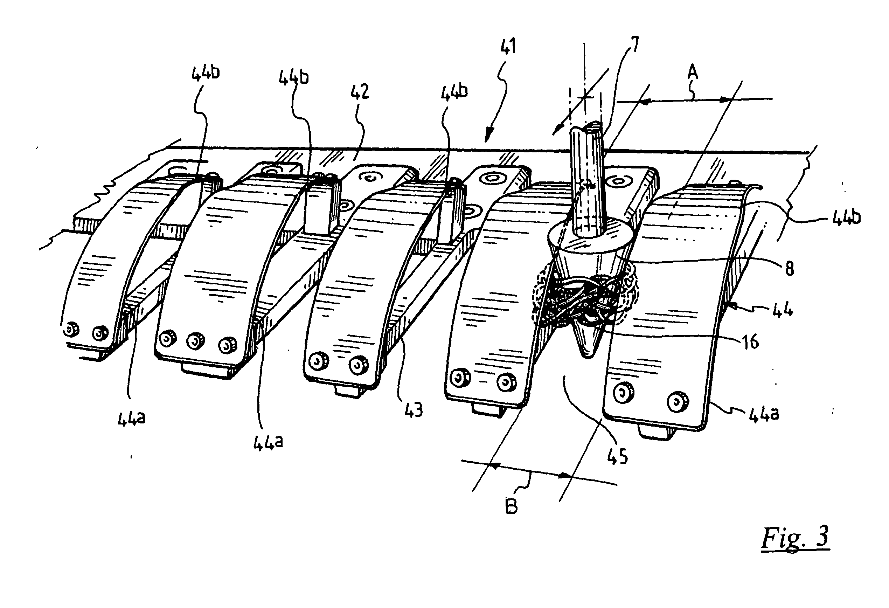

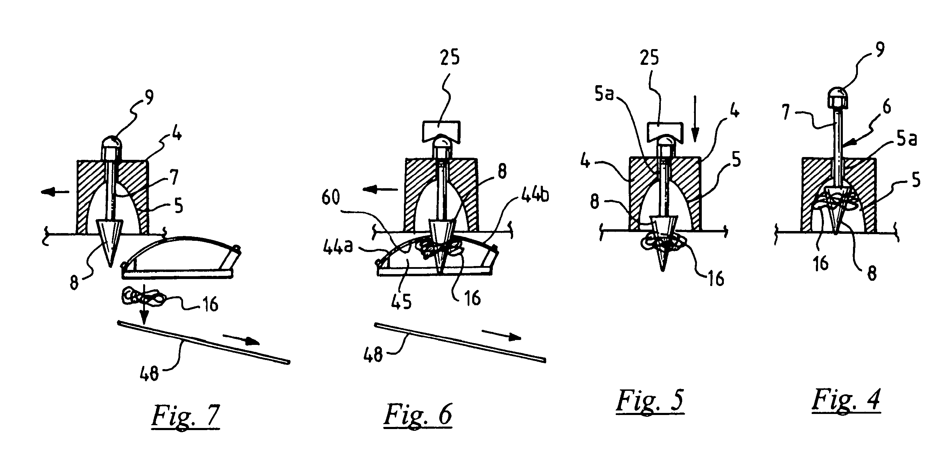

Now with particular reference to figures 3 to 7, in the apparatus 1 according to the invention the frozen nests 16 carried by the conical portions 8 of the push rods 6 of overturned cross-members 4 are intercepted by the rack 41 between tapered portions 44b of the curved plate-shaped elements 44 each entering into an area 45 defined below by adjacent bars 43 and on top by respective plate-shaped elements associated with said adjacent bars 43.

By virtue of the continuous motion of the cross-members 4 conveyed by the chains 10 of the track 22, the frozen nests 16 carried by the respective conical portions 8 of the push rods 6 cross the areas 45 until said frozen nests 16 impact against a respective concave intrados 60 of the plate-shaped elements 44 at their portions 44a of greater width.

At this level, the plate-shaped elements 44 exert a holding action towards the frozen nests 16 in the aforementioned areas 45 in contrast with the force caused by the advancing of the cross-members 4 thus causing the detachment of the frozen nests 16 from the respective conical portions 8 of the push rods 6.

After the detachment of the frozen nests 16, the conical portions 8 of the push rods 6 conveyed by the overturned cross-members 4 move away from the areas 45 by exiting through the portions 44a of greater width of the curved plate-shaped elements 44.

The frozen nests 16 detached from the conical portions 8 of the push rods 6 are suitably recovered, at first on a first conveyor belt 48 on an upper track 49 thereof that is mobile with forward direction opposite to that of the track 22 of the chains 10 and from here onto a second conveyor belt 50 arranged below and transversal with respect to the first conveyor belt 48.

The frozen nests 16 are then conveyed by the second conveyor belt 50 towards other processing stations, for example a packaging station.

In the apparatus 1, the overturned cross-members 4 devoid of the frozen nests 16 are subject to a further turning over, i.e. a 180° rotation, which brings them back to the original position. In accordance with the present invention, this is achieved through the disengagement of the pegs 13 of said overturned cross-members 4 from the guiding rails 24 with consequent spontaneous turning over of said cross-members by effect of their barycentres.

Subsequently, the cross-members 4 cross a tank 52 containing washing water on a track 51 of the chains 10.

After washing, the cross-members 4 continue their path along the track 53 of the chains 10 to be taken underneath the loading hoppers 2 so as to start a new production cycle of frozen nests.

In addition to the advantages outlined previously, it should be noted that the apparatus according to the invention has a reduced horizontal dimension, as the salting and washing tanks, as well as the pushing devices of the push rods of the overturned cross-members and the devices for the interception, detachment and recovery of the frozen nests from the respective cups of the cross-members, are arranged below the freezer.

A further advantage of the apparatus according to the invention also lies in the fact that it lends itself to large-scale production at low cost.

In this regard, indeed, it should be noted that the apparatus according to the invention does not employ the heating of the cups for the removal of the frozen nests, as is the case with known apparatuses, but rather mechanical systems that employ the intercepting of the frozen nests carried by the respective conical portions of the push rods between the curved plate-shaped elements of a rack and the detaching of the frozen nests by impact thereof against concave faces of said plate-shaped elements.

Therefore, for the same production quantity of frozen nests of long pasta, substantial energy saving is achieved with the apparatus according to the invention compared to known apparatuses.

A man skilled in the art may implement several modifications and variations to the apparatus according to the invention in order to satisfy specific requirements, without however departing from the scope of protection of the attached claims.

## Claims

1. Apparatus for the production of frozen nests (16) of cooked long pasta comprising:
- a plurality of cross-members (4) each having a plurality of cups (5), said cross-members (4) being rotatably supported on chains (10) and mobile with them,
- a plurality of loading hoppers (2) to introduce predetermined portions of cooked long pasta into said cups (5) obtaining a nest (16) of cooked long pasta in each cup (5),
- a freezer (3) to carry out the freezing of said nests (16) of cooked long pasta, obtaining a plurality of frozen nests (16) of cooked long pasta in the respective cups (5) of said cross-members (4),
- means (12, 23) for overturning said cross-members (4) containing said frozen nests (16) in the respective cups (5),
- a plurality of push rods (6), one for each cup (5), having a portion (8) about which a nest (16) forms and adheres, said push rods (6) being vertically mobile in said cups (5) between a rest position in which said portions (8) with the respective nests (16) formed about them are situated in the respective cups (5) and an operative position in which said portions (8) with the respective nests (16) formed about them project from the respective cups,
- at least one pusher (25) acting on push rods (6) of said overturned cross-members (4) containing said frozen nests (16) in the respective cups (5) so as to take said push rods (6) from said rest position to said operative position, with the result that said portions (8) of the push rods and said frozen nests formed about them project from the respective cups (5),
- means (41) for intercepting said portions (8) of the push rods (6) and said frozen nests (16) projecting from the respective cups causing the detachment of said frozen nests (16) from said portions (8) of the push rods (6).

2. Apparatus according to claim 1, wherein said portions (8) of the push rods (6) about which said nests (16) form and adhere have a substantially conical shape.

3. Apparatus according to claim 1 or 2, wherein said means (12, 23) for overturning said cross-members (4) containing said frozen nests (16) in the respective cups (5) comprise a pair of toothed gears (12) formed at the opposite ends of each one of said cross-members (4) and a pair of racks (23) on which the teeth of said toothed gears (12) engage.

4. Apparatus according to any one of the previous claims, wherein said at least one pusher comprises a plurality of plates (25) chained together and mobile in the same forward direction as said overturned cross-members (4) along an oblique path converging towards said chains (10) so as to intercept said overturned cross-members (4) in a zone (26) by abutting against the respective push rods (6) so as to take them from said rest position to said operative position.

5. Apparatus according to claim 4, wherein said chained plates (25) are mobile between toothed wheels (31) arranged at different heights so as to have an ascending section (32) and a descending section (33), said descending section (33) constituting said oblique path converging towards said chains (10).

6. Apparatus according to any one of the previous claims, wherein said intercepting and detaching means comprise a rack (41) having a plurality of curved plate-shaped elements (44) substantially parallel to each other, each curved plate-shaped element (44) comprising a first portion (44a) that tapers into a second portion (44b), said rack (41) being arranged so as to intercept said portions (8) of the push rods (6) and said frozen nests (16) projecting from the respective cups (5) between said second portions (44b) and cause the detachment of said frozen nests (16) from said portions (8) of the push rods (6) at a concave face (60) of said first portions (44a).

7. Apparatus according to claim 6, wherein the distance (A) between adjacent curved plate-shaped elements (44) at said second portions (44b) is chosen so as to allow the passage of said frozen nests (16) carried by said portions (8) of the push rods (6) between them, whereas the distance (B) between adjacent curved plate-shaped elements (44) at said first portions (44a) is selected so as to allow only said portions (8) of the push rods (6) to pass between them.

8. Apparatus according to any one of the previous claims, further comprising a tank (11) containing salted water for the salting of the nests (16) of long pasta contained in the cups (5) of said cross-members (4) and a tank (52) containing water for the washing of the cross-members (4) devoid of said frozen nests (16).

## Patentansprüche

1. Vorrichtung zur Herstellung von aus gekochten Teigsträngen geformten gefrorenen Nestern (16) umfassend:
- eine Vielzahl von Querträgern (4), welche jeweils eine Vielzahl von Näpfen (5) aufweisen, wobei die Querträger (4) drehbar an Ketten (10) gelagert sind und mit ihnen beweglich sind,
- eine Vielzahl von Einfülltrichtern (2), um vorbestimmte Portionen von gekochten Teigsträngen in die Näpfe (5) einzubringen, um ein aus gekochten Teigsträngen geformtes Nest (16) in jedem Napf (5) zu erhalten,
- einen Gefrierschrank (3), um das Einfrieren der aus gekochten Teigsträngen geformten Nester (16) durchzuführen, um eine Vielzahl von aus gekochten Teigsträngen geformten gefrorenen Nestern (16) in den entsprechenden Näpfen (5) der Querträger (4) zu erhalten,
- Mittel (12, 23) zum Kippen der Querträger (4), welche in den entsprechenden Näpfen (5) die gefrorenen Nester (16) enthalten.
- eine Vielzahl von Schubstangen (6), eine für jeden Napf (5), welche ein Teil (8), an welchem sich ein Nest (16) bildet und anhaftet, aufweisen, wobei die Schubstangen (6) in den Näpfen (5) zwischen einer Ruheposition, in welcher die Teile (8) mit den **dadurch** gebildeten entsprechenden Nestern (16) in den entsprechenden Näpfen (5) untergebracht sind, und einer Betriebsposition, in welcher die Teile (8) mit den **dadurch** gebildeten entsprechenden Nestern (16) aus den entsprechenden Näpfen (5) herausragen, vertikal beweglich sind,
- mindestens einen Schieber (25), welcher auf die Schubstangen (6) der gekippten Querträger (4), welche die gefrorenen Nester (16) in den entsprechenden Näpfen (5) enthalten, wirkt, um so die Schubstangen (6) aus der Ruheposition in die Betriebsposition zu bringen, mit dem Ergebnis, dass die Teile (8) der Schubstangen und die **dadurch** gebildeten gefrorenen Nester aus den entsprechenden Näpfen (5) herausragen,
- Mittel (41) zum Abfangen der Teile (8) der Schubstangen (6) und der gefrorenen Nester (16), welche aus den entsprechenden Näpfen herausragen, welche das Ablösen der gefrorenen Nester (16) von den Teilen (8) der Schubstangen (6) verursachen.

2. Vorrichtung gemäß Anspruch 1, wobei die Teile (8) der Schubstangen (6), an welchen sich die Nester (16) bilden und anhaften, eine im Wesentlichen konische Form aufweisen.

3. Vorrichtung gemäß Anspruch 1 oder 2, wobei die Mittel (12, 23) zum Kippen der Querträger (4), welche die gefrorenen Nester (16) in den entsprechenden Näpfen (5) enthalten, eine Paar gezahnte Zahnräder (12), welche an den gegenüberliegenden Enden eines jeden der Querträgers (4) gebildet sind und ein Paar Zahnstangen (23), worauf die Zähne der gezahnten Zahnräder (12) eingreifen, umfassen.

4. Vorrichtung gemäß einem der vorangegangenen Ansprüche, wobei mindestens ein Schieber eine Vielzahl von miteinander verketteten und in der gleichen Vorwärtsrichtung, wie die kippenden Querträger (4) entlang eines schrägen in Richtung der Ketten konvergierenden Pfades beweglichen Platten (25) umfasst, um die gekippten Querträger (4) in einer Zone (26) durch Anstoßen gegen entsprechende Schubstangen (6) abzufangen, um so diese aus der Ruheposition in die Betriebsposition zu bringen.

5. Vorrichtung gemäß Anspruch 4, wobei die verketteten Platten (25) zwischen den gezahnten Rädern (31) in verschiedenen Höhen beweglich angeordnet sind, um so einen aufsteigenden Bereich (32) und einen absteigenden Bereich (33) aufzuweisen, wobei der absteigende Bereich (33) den in Richtung der Ketten konvergierenden schrägen Pfad darstellt.

6. Vorrichtung gemäß einem der vorangegangenen Ansprüche, wobei das abfangende und lösende Mittel ein Rack (41), welches eine Vielzahl von im Wesentlichen parallel zueinander angeordneten, gebogenen plattenförmigen Elementen (44) aufweist, umfasst, wobei jedes gebogene plattenförmige Element (44) ein erstes Teil (44a), welches sich in ein zweites Teil (44b) verjüngt, umfasst, wobei das Rack (41) angeordnet ist, um so die Teile (8) der Schubstangen (6) und die gefrorenen Nester (16), welche zwischen den zweiten Teilen (44b) aus den entsprechenden Näpfen (5) herausragen, abzufangen, und das Lösen der gefrorenen Nester (16) von den Teilen (8) der Schubstangen (6) bei einer konkaven Fläche (60) der ersten Teile (44a) zu verursachen.

7. Vorrichtung gemäß Anspruch 6, wobei der Abstand (A) zwischen angrenzenden gebogenen plattenförmigen Elementen (44) bei den zweiten Teilen (44b) so gewählt ist, dass der Durchgang der von den Teilen (8) der Schubstangen (6) getragenen gefrorenen Nester (16) zwischen ihnen ermöglicht ist, wohingegen der Abstand (B) zwischen angrenzenden gebogenen plattenförmigen Elementen (44) bei den ersten Teilen (44a) ausgewählt ist, um so nur den Teilen (8) der Schubstangen (6) zu erlauben zwischen ihnen zu passieren.

8. Vorrichtung gemäß einem der vorangegangenen Ansprüche, weiterhin umfassend einen Tank (11), welcher gesalzenes Wasser zum Salzen der in den Näpfen (6) der Querträger (4) enthaltenen, aus gekochten Teigsträngen geformten Nester (16) enthält und einen Tank (52), welcher Wasser zum Waschen der Querträger (4), welche frei von gefrorenen Nestern (16) sind, enthält.

## Revendications

1. Dispositif pour la production de nids surgelés (16) de pâte alimentaire allongée précuite, comprenant:
- une pluralité d'éléments transversaux (4) qui comprennent chacun une pluralité de coupes (5), lesdits éléments transversaux (4) étant supportés de façon rotative sur des chaînes (10) et étant déplaçables avec celles-ci,
- une pluralité de trémies de chargement (2) pour introduire des portions prédéterminées de pâte alimentaire allongée précuite dans lesdites coupes (5) pour obtenir un nid (16) de pâte alimentaire allongée précuite dans chaque coupe (5),
- un surgélateur (3) pour procéder à la surgélation desdits nids (16) de pâte alimentaire allongée précuite, pour obtenir une pluralité de nids surgelés (16) de pâte alimentaire allongée précuite dans les coupes respectives (5) desdits éléments transversaux (4),
- des moyens (12, 23) pour retourner lesdits éléments transversaux (4) qui contiennent lesdits nids surgelés (16) dans les coupes respectives (5),
- une pluralité de tiges de poussée (6), une pour chaque coupe (5), comprenant une partie (8) autour de laquelle un nid (16) se forme et à laquelle il adhère, lesdites tiges de poussée (6) étant mobiles verticalement dans lesdites coupes (5) entre une position de repos, dans laquelle lesdites parties (8) comportant les nids respectifs (16) formés autour de celles-ci sont situées dans les coupes respectives (5), et une position de travail, dans laquelle lesdites parties (8) comportant les nids respectifs (16) formés autour de celles-ci font saillie hors des coupes respectives,
- au moins un poussoir (25) qui agit sur les tiges de poussée (6) desdits éléments transversaux retournés (4) qui contiennent lesdits nids surgelés (16) dans les coupes respectives (5) de manière à faire glisser lesdites tiges de poussée (6) de ladite position de repos dans ladite position de travail, avec pour résultat que lesdites parties (8) des tiges de poussée et lesdits nids surgelés qui sont formés autour de celles-ci font saillie hors des coupes respectives (5),
- des moyens (41) pour intercepter lesdites parties (8) des tiges de poussée (6) et lesdits nids surgelés (16) qui font saillie hors des coupes respectives afin d'entraîner le détachement desdits nids surgelés (16) desdites parties (8) des tiges de poussée (6).

2. Dispositif selon la revendication 1, dans lequel lesdites parties (8) des tiges de poussée (6) autour desquelles lesdits nids (16) se forment et auxquelles ils adhèrent présentent une forme sensiblement conique.

3. Dispositif selon la revendication 1 ou 2, dans lequel lesdits moyens (12, 23) pour retourner lesdits éléments transversaux (4) qui contiennent lesdits nids surgelés (16) dans les coupes respectives (5) comprennent une paire d'engrenages dentés (12) qui sont formés aux extrémités opposées de chacun desdits éléments transversaux (4) et une paire de crémaillères (23) sur lesquelles les dents desdits engrenages dentés (12) s'engagent.

4. Dispositif selon l'une quelconque des revendications précédentes, dans lequel ledit au moins un poussoir comprend une pluralité de plaques (25) qui sont enchaînées les unes aux autres et qui sont mobiles dans la même direction vers l'avant que lesdits éléments transversaux retournés (4) le long d'un chemin oblique qui converge en direction desdites chaînes (10) de manière à intercepter lesdits éléments transversaux retournés (4) dans une zone (26) en butant contre les tiges de poussée respectives (6) de façon à les faire glisser de ladite position de repos dans ladite position de travail.

5. Dispositif selon la revendication 4, dans lequel lesdites plaques enchaînées (25) sont mobiles entre des roues dentées (31) qui sont agencées à des hauteurs différentes de manière à présenter une section ascendante (32) et une section descendante (33), ladite section descendante (33) constituant ledit chemin oblique qui converge en direction desdites chaînes (10).

6. Dispositif selon l'une quelconque des revendications précédentes, dans lequel lesdits moyens d'interception et de détachement comprennent une crémaillère (41) qui présente une pluralité d'éléments courbes en forme de plaque (44) qui sont sensiblement parallèles les uns aux autres, chaque élément courbe en forme de plaque (44) comprenant une première partie (44a) qui se rétrécit en une deuxième partie (44b), ladite crémaillère (41) étant agencée de manière à intercepter lesdites parties (8) des tiges de poussée (6) et lesdits nids surgelés (16) faisant saillie hors des coupes respectives (5) entre lesdites deuxièmes parties (44b) et à entraîner le détachement desdits nids surgelés (16) desdites parties (8) des tiges de poussée (6) à une face concave (60) desdites premières parties (44a).

7. Dispositif selon la revendication 6, dans lequel la distance (A) entre des éléments courbes en forme de plaque voisins (44) auxdites deuxièmes parties (44b) est choisie de manière à permettre le passage desdits nids surgelés (16) portés par lesdites parties (8) des tiges de poussée (6) entre ceux-ci, alors que la distance (B) entre des éléments courbes en forme de plaque voisins (44) auxdites premières parties (44a) est sélectionnée de manière à permettre uniquement auxdites parties (8) des tiges de poussée (6) de passer entre ceux-ci.

8. Dispositif selon l'une quelconque des revendications précédentes, comprenant en outre un réservoir (11) contenant de l'eau salée pour saler les nids (16) de pâte alimentaire allongée contenus dans les coupes (5) desdits éléments transversaux (4), et un réservoir (52) contenant de l'eau pour laver les éléments transversaux (4) vidés desdits nids surgelés (16).
